Europäisches Patentamt

European Patent Office

Office européen des brevets

(19)

(11) Publication number: **0 442 116 A2**

## EUROPEAN PATENT APPLICATION

(12)

(21) Application number: **90124882.3**

(22) Date of filing: **20.12.90**

(51) Int. Cl.5: **G06F 9/38**

(30) Priority: **13.02.90 US 479785**

(43) Date of publication of application:
**21.08.91 Bulletin 91/34**

(84) Designated Contracting States:
**DE FR GB**

(71) Applicant: **HEWLETT-PACKARD COMPANY**
**P.O. Box 10301, M/S 2OBO**
**Palo Alto, California 94303-0890(US)**

(72) Inventor: **Tanksalvala, Darius**
**1384 S. Poplar St.**
**Denver, CO 80224(US)**
Inventor: **Knebel, Patrick**
**1640 Kirkwood Drive No. 2115**
**Fort Collins, CO 80525(US)**
Inventor: **Simpson, Craig R.**
**1705 Heatheridge No. A205**
**Fort Collins, CO 80526(US)**
Inventor: **Delano, Eric R.**
**724 Oxford Lane**
**Fort Collins, CO 80525(US)**
Inventor: **Hotchkiss, Thomas R.**
**1720 Kirkwood Drive No. N27**
**Fort Collins, CO 80525(US)**

(74) Representative: **KOHLER SCHMID + PARTNER**
**Patentanwälte**
**Ruppmannstrasse 27**
**W-7000 Stuttgart 80(DE)**

(54) **Pipeline method and apparatus.**

(57) Pipeline structure that is arranged to allow 1.5 cycle access time for both data (14) and instruction (12) cache without imposing additional instruction step delays than that imposed by data (14) and instruction (12) cache that have 1 cycle access time. Half cycle pulses are produced to allow execution of various instructions in .5 cycles. A bypass signal (52) is generated to allow data from a current load instruction to be available for a second subsequent instruction even though the access time for data cache is 1.5 cycles. Additionally, a branch address is available for a third subsequent instruction even though instruction cache access time is 1.5 cycles. The present invention shows the initiation of an instruction step for each cycle and 1.5 cycle access time for cache memory (12, 14). The present invention can also be implemented by implementing an instruction every 2 cycles and providing 3 cycle access time for cache memory (12, 14).

EP 0 442 116 A2

# PIPELINE METHOD AND APPARATUS

## BACKGROUND OF THE INVENTION

### A. Field of Invention

The present invention pertains generally to computer systems and more particularly to the manner of executing successive instructions in a computer system.

### B. Description of the Background

Digital computer systems operate by executing a series of successive instructions that control the functions of the computer system. Typically, a new instruction step will be initiated for each cycle that is initiated by a processor of the computer system, so that a successive number of sequential instructions are being executed by the processor simultaneously. This process of executing a series of successive instruction steps simultaneously is known as a "pipeline." For any given set of successive instruction steps, the instruction that is currently being executed is referred to as the "current instruction step" and each successive subsequent instruction is indicated by its number. For example, the next instruction that is executed after the current instruction is referred to as the "first subsequent instruction step." If that instruction step is a "load instruction" that instruction step is referred to as the "first subsequent load instruction step." Similarly, if that instruction is an "add and branch if true instruction" it may be referred to as a "first subsequent branch instruction step." The next instruction step after the first subsequent instruction step is referred to as the "second subsequent instruction step," and so on. If, for any reason, an instruction step must be skipped in the series of successive instruction steps, the pipeline is said to have imposed upon it a "penalty of a one instruction step delay." This can occur, for example, when a load instruction needs data from a previous load instruction which has not yet finished retrieving the necessary data from a data cache. For example, instruction step delays may occur when the "operand address," i.e., the address from which data is to be retrieved from a general register, for a subsequent instruction, is the same as the "target address," i.e., the address to which data is to be stored or written, for a previous instruction. If the previous instruction has not yet stored the data in the general registers at the target address, and the target address is the same as the operand address of a subsequent instruction, then the subsequent instruction cannot be executed and a delay penalty will be imposed.

A similar situation occurs during a "branch instruction," i.e., an instruction that directs the processor to branch off to a new location in the sequence of successive instructions that would otherwise be followed by the processor. During the execution of a branch instruction, the branch instruction generates a new address for retrieving the new instruction. The processor requires a certain period of time to retrieve the branch instruction, decode it and determine the new address of the branch instruction. Since these functions take numerous cycles to accomplish, a number of instruction step delays may be imposed on the pipeline. Typically, the branch instruction is placed in the pipeline so that the first subsequent instruction after the branch instruction is an instruction that would normally be executed in the series of successive instruction steps. A pipeline designed in this manner is referred to as a "one state delay branch architecture." Hence, if the branch instruction address is not ready until the third subsequent instruction step, a penalty of only a one instruction step delay is imposed in a one state delay branch architecture.

In designing a microprocessor chip, it is advantageous to have the chip operate as fast as possible, by executing instructions and processing information in the shortest possible time. In achieving this goal, it is desirable to minimize the penalties for instruction step delays. Otherwise, the time gained in decreasing cycle time may be lost in instruction step delays. One method that has been used to significantly decrease the access time for retrieving an instruction, or data, has been to use instruction caches and data caches which comprise high speed memory that are connected directly between the microprocessor chip and slower memory such as dynamic random access memory (DRAM). These cache memories can comprise high speed flip-flops that are expensive, and occupy a relatively large amount of space in the system for the amount of data stored. Despite these limitations, cache memory does have a relatively fast response time which allows data or instructions to be fetched in a relatively rapid manner in comparison to DRAM, i.e., typically on the order of 15 nanoseconds to 30 nanoseconds or more access time. Access time, in this regard, may include the full cycle time from issuing an address until an instruction is received back by a processor and decoded.

Although cache memory in the form of instruction cache and data cache, is significantly faster than DRAM, it does limit the speed at which a microprocessor can operate. Conventional microprocessor architectures are designed for an access time for instruction cache and data cache of one cycle. By providing a one cycle response time, a penalty of only one instruction step delay is imposed for subsequent load instructions, i.e., the data is available for a second subsequent load instruction. Similarly, a penalty of only one instruction step delay is imposed for branch instructions in a one-state delay branch architecture, i.e., the branch address is available for the third subsequent instruction step. The problem with allowing only a one cycle response time, to fetch instructions from the instruction cache and to fetch data from the data cache, is that the cycle period of the processor must be sufficiently long to accommodate the response time of the instruction cache and the data cache. It is clear that many other steps can be executed in the microprocessor in a much shorter period than the period required by the response time of the instruction cache and data cache memories. Hence, the entire system must be slowed down and operate at slower speeds. With currently available instruction cache and data cache, typical microprocessors operate, at the present time, in the range of 15 to 20 megahertz. The limit of operation with currently available memory caches using current pipeline techniques may be on the order of 40 megahertz.

The one method considered by the inventors of the present invention to overcome these limitations, but not known to be prior art, was to allow two cycle periods for the instruction cache and data cache access time, while operating the other instructions on a one cycle time period. While this allows the microprocessor to operate at a much faster rate, i.e., double the rate at which it could operate if the cache memories had an access time of only one cycle, penalties of greater than one instruction step delay were imposed in the pipeline, which did not net an overall decrease in the response time of the microprocessor system. For example, in the process of executing load instructions, a penalty of a two instruction step delay was imposed when the data cache access time was set at two cycles. Similarly, in branch instructions, a penalty of a two instruction step delay was imposed in a one state delay branch architecture when the instruction cache access time was set at two cycles.

Hence, prior art microprocessors have been limited by the response time of the memory cache, and the allowance of a two cycle response time for memory cache does not solve these problems since additional instruction delay penalties would be imposed on the pipeline.

## SUMMARY OF THE INVENTION

The present invention overcomes the disadvantages and limitations of the prior art by providing a unique method and device of executing instructions in an instruction pipeline that allows more than one cycle access time for instruction cache and memory cache while imposing a delay of only one instruction step in the pipeline for both load and branch instructions. The present invention may therefore include a method of executing a series of instructions in a computer system such that a separate instruction step is initiated for at least every cycle comprising the steps of; accessing instruction cache in the computer system to fetch an instruction in less then two cycles and more than one cycle to allow an access time of more than one cycle for the instruction cache, accessing data cache in the computer system to fetch data in less than two cycles and more than one cycle to allow an access time of more than one cycle for the data cache, directing data from the data cache to an arithmetic logic unit whenever the data is required by a second subsequent instruction step so that a penalty of only one instruction step delay is imposed even though the access time of the instruction cache and the data cache is more than one cycle, and, executing a third subsequent instruction step as a branch instruction designated by a current instruction step whenever a specified condition in the current instruction step is true so that a penalty of only one instruction step delay is imposed in a one state delay branch architecture even though the access time of the instruction cache and the data cache is more than one cycle.

The present invention may also comprise a device for executing load instructions in an instruction pipeline that allows more than a one cycle access time for data cache while imposing a delay of only one instruction step for load instructions comprising; clock means for generating cycle clock pulses that define a cycle period and phase shifted clock pulses that are phase shifted from the cycle clock pulses by a predetermined phase shift period, control means for generating a bypass signal whenever a target address of a current load instruction step is the same as a operand address for a second subsequent load instruction step, data cache means having an access time substantially equal to the cycle period plus the predetermined phase shift period for generating data cache data, means for directing the data cache data from a current load instruction step to an arithmetic logic unit in response to the bypass signal so that the data cache data from the current load instruction can be combined with an immediate value of a second subsequent load instruction step resulting in a delay of only one instruction step even though the data cache means has an access time substantially equal to the cycle period plus the predetermined phase shift period.

The present invention may also comprise a device for executing branch instructions in an instruction pipeline that allows more than one cycle access time for instruction cache while imposing a delay of only one instruction step in a one state delay branch architecture comprising; clock means for generating cycle clock pulses that define a predetermined cycle period and phase shifted clock pulses that are phase shifted from the cycle clock pulse by a predetermined phase shift period, comparator means for comparing a condition value of a current branch instruction with a general register sum to produce a comparator control signal, means for generating a branch address whenever the condition value is the same as the general register sum, and, instruction cache means for generating a branch instruction in response to the branch address during an access time that is substantially equal to the predetermined cycle period plus the predetermined phase shift period so that the branch instruction can be utilized by a third subsequent instruction, resulting in a delay of only one instruction step in a one state delay branch architecture device.

The advantages of the present system are that the predetermined phase shift period can be set at approximately half a cycle so that the instruction cache and data cache are given an extra half cycle response time. Since a clock pulse is produced every half cycle, other operations within the microprocessor can be executed during half cycle periods which allows the computer system to operate at a very high speed. In fact, this may triple the operational speed of executing some instructions over the limits of conventional microprocessors that allow a one cycle response time for the memory cache. In essence, both the instruction cache and data cache are given the equivalent of three half-cycle response periods without imposing a penalty of more than a one instruction step delay, which is no greater than prior art systems.

BRIEF DESCRIPTION OF THE DRAWINGS

Figure 1 is a schematic block diagram of the microprocessor apparatus and memory caches of the present invention.

Figure 2 is a flow diagram of the operation of the device illustrated in Figure 1 in accordance with the present invention.

Figure 3 is a flow diagram of the operation of the device of Figure 1 during a load instruction step.

Figure 4 is a flow diagram of the operation of the device of Figure 1 during an add and branch if true instruction step.

Figure 5 is a schematic diagram of the pipeline of the present invention during execution of load instructions.

Figure 6 is a schematic diagram of the pipeline of the present invention during execution of branch instructions.

Figure 7 is a schematic diagram illustrating the data fields of a branch instruction.

Figure 8 is a schematic diagram illustrating the data fields of a load instruction.

DETAILED DESCRIPTION OF THE PRESENT INVENTION

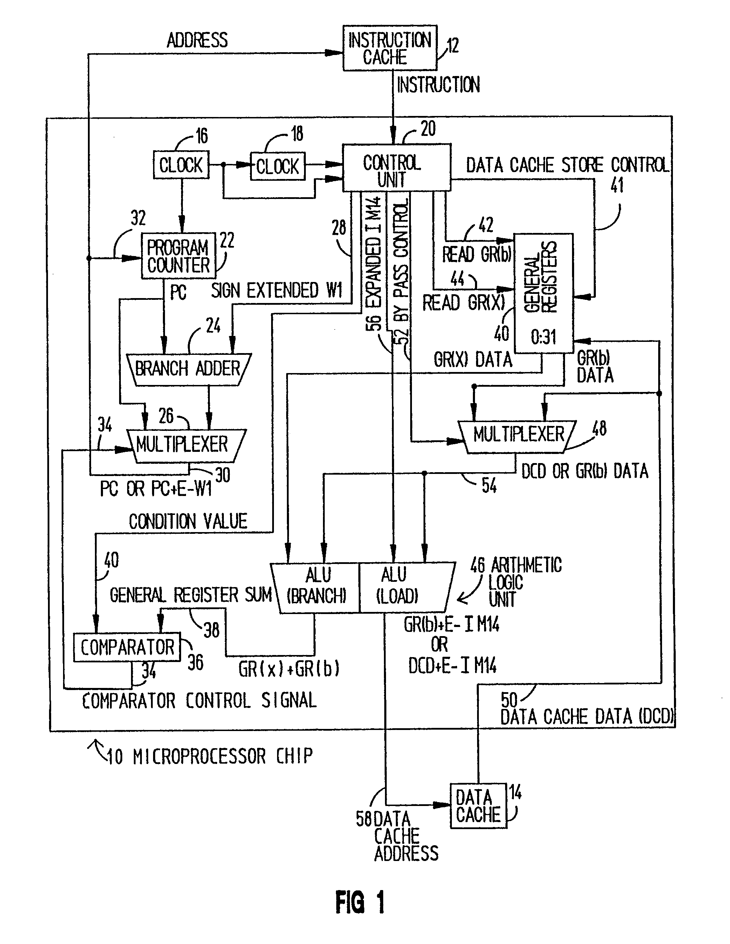

Figure 1 is a schematic block diagram of the device of the present invention illustrating a microprocessor chip 10 having an instruction cache 12 and a data cache 14 attached to the microprocessor 10. Instruction cache 12 and data cache 14 may have additional connections to DRAM which are not shown, as well as control lines for reading and writing data from DRAM memory (now shown). Additionally, microprocessor chip 10 does not illustrate all of the commonly known components of a microprocessor chip, but rather, illustrates the primary components and the interconnection of these components that relate to the present invention.

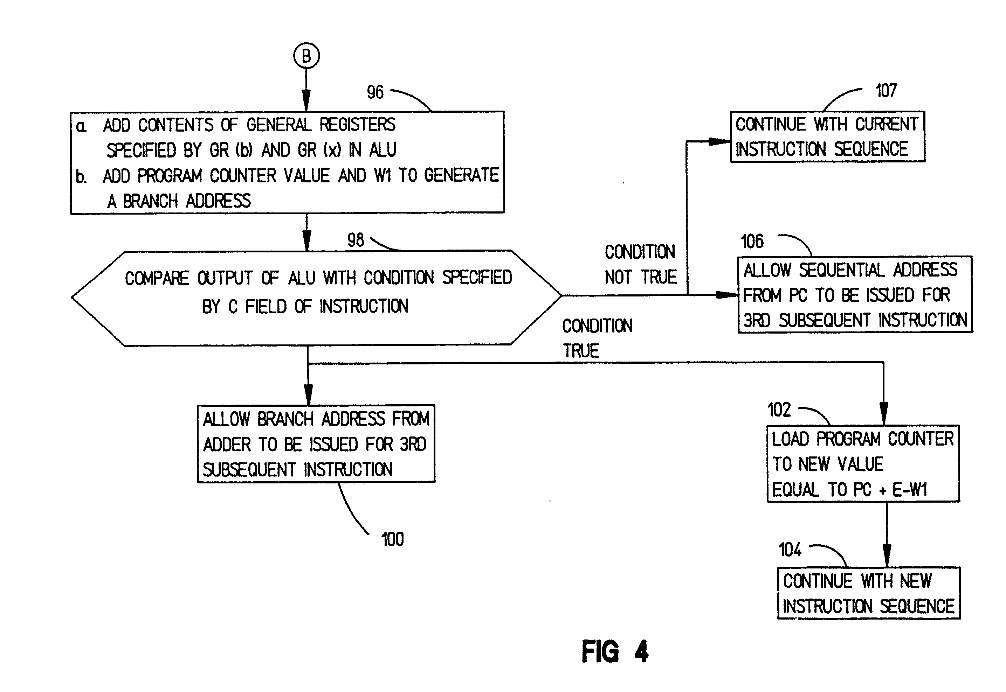

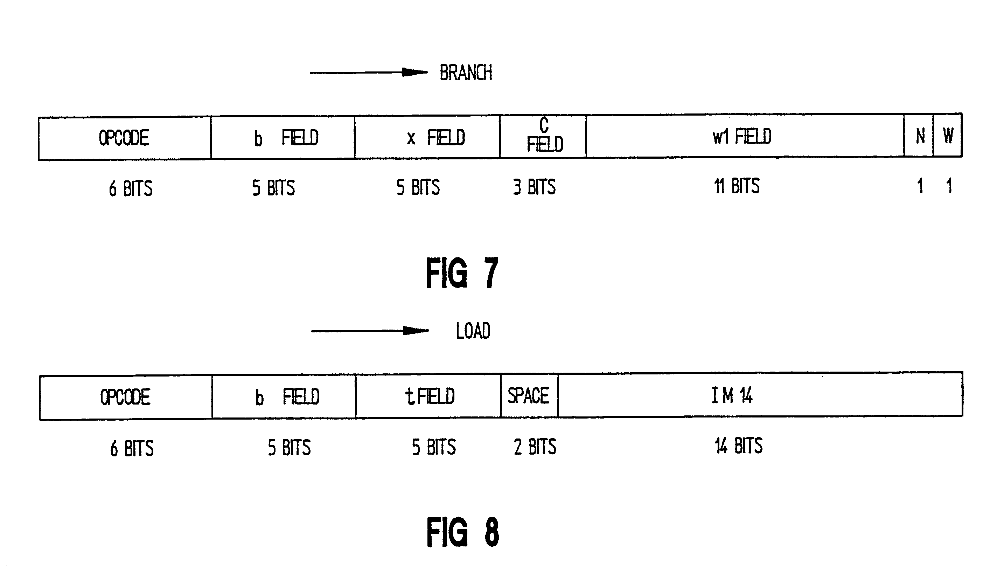

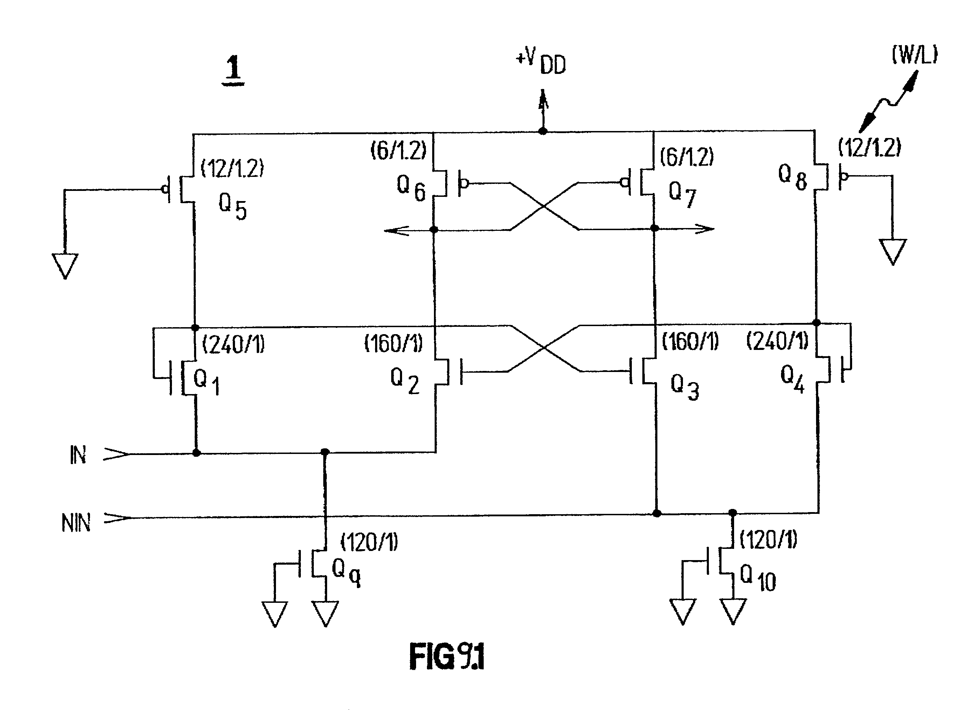

In accordance with the present invention, clock circuit 16 generates clock signals that are referred to as "cycle clock pulses." These pulses indicate the beginning of each cycle in the pipeline. Similarly, clock 18 has the same period as clock 16, but is phase shifted by a predetermined phase shift period. Clock pulses can be generated in accordance with a clock circuit such as disclosed in U.S. Patent application S.N. _____ filed February 13, 1990 by Robert H. Miller entitled "High Speed Low Skew Clock Circuit" which is specifically incorporated herein for all that it teaches. In accordance with the preferred embodiment of the invention, clock 18 is phase shifted by a half cycle so that clock 16 and clock 18 produce clock pulses each half cycle. These clock pulses are transmitted to control unit 20, as well as many of the other components illustrated in Figure 1. Specifically, the cycle clock pulses produced by clock 16 at the beginning of each cycle are transmitted to program counter 22 which is incremented by one for each cycle clock pulse. The program counter count, which is known as a "PC value," is transmitted to branch adder 24 and multiplexer 26. Branch adder 24 adds the PC value to a value specified by a current branch instruction, which is a value W1 that has been sign extended (E-W1), as more fully described in the description of figures 4 and 7. The sign extended W1 value is transmitted from control unit 20 to branch adder 24 on line 28. Multiplexer 26 selects either the PC value transmitted directly from program counter 22, or the PC value plus the sign extended W1 (E-W1) value from branch adder 24, and produces one of these at its output on line 30. These values are transmitted as an address to instruction cache 12 and as a new load value to load, or reset, the program counter 22 via line 32.

Multiplexer 26 selects one of these values in accordance with a comparator control signal 34 produced by a comparator 36. Comparator 36 compares a general register sum produced on input line 38 with condition data 40 transmitted from control unit 20. The general register sum is equal to the general register data specified by the "x" field of a branch instruction plus the general register data specified by the "b" field of a branch instruction. The GR(x) data is transmitted directly from general register 40 in response to read signal 44, and the GR(b) data is read indirectly through multiplexer 48 in response to read signal 42 and bypass control signal 52 produced by control unit 20, and are added in arithmetic logic unit 46, to produce the general register sum. The general register data specified by the "b" field of a load instruction is transmitted to multiplexer 48 in response to a read signal transmitted by line 42 to read the general register specified by the "b" field of a load instruction.

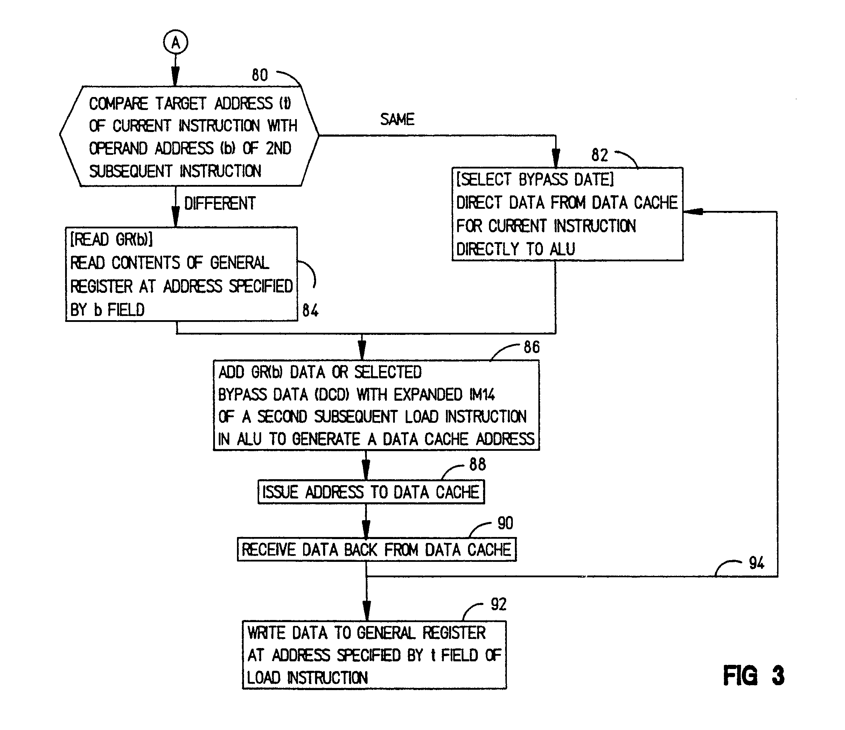

Data cache data produced at the output of 50 of data cache 14 is also transmitted to multiplexer 48. Multiplexer 48 selects either the data from the general register specified by the "b" field of a load instruction [GR(b)data] or the data cache data (DCD), in accordance with a bypass control signal 52 produced by control unit 20. Bypass control 52, as explained more fully in the description of Figure 3, is generated whenever the data cache data is to be directly channelled to arithmetic logic unit 46 for use by a second subsequent load instruction. The data control data, or general register data specified by the "b" field of the load instruction, is transmitted by multiplexer 48 to the input of arithmetic logic 46 via line 54. An immediate value, known as an expanded IM14 value (E-IM14), is also connected to the input of arithmetic logic unit 46 via line 56. Arithmetic logic unit 46 adds the immediate value (E-IM14) with either the data cache (DCD) or the general register data as specified by the "b" field of the load instruction [GR(b)] to produce a "data cache address" on line 58. The data cache address is directed, via line 58, to data cache 14 to fetch data stored in the data cache at the data cache address.

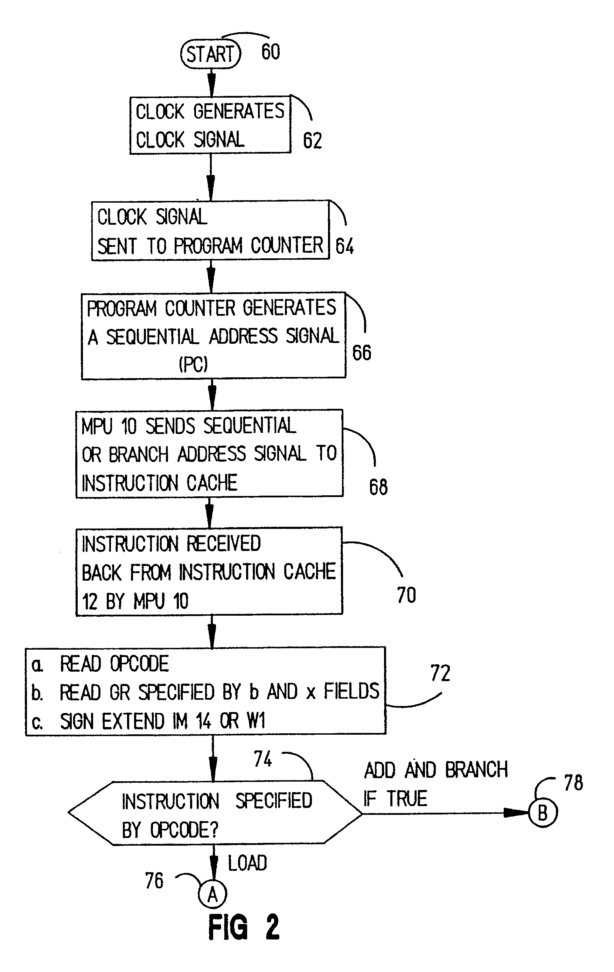

Figure 2 is a flow diagram illustrating the operation of the device of Figure 1. As shown in Figure 2, the process starts, as illustrated by reference numeral 60, and the clocks generate clock signals, as illustrated by reference numeral 62. The clock signal is then sent to the program counter, at reference numeral 64, and the program counter generates a sequential address signal (PC), as illustrated by reference numeral 66. The microprocessor unit 10 then sends a sequential PC or branch address signal to the instruction cache 12, as illustrated by reference numeral 68, and the instruction is received back from the instruction cache 12 by the microprocessor unit 10, as illustrated by reference numeral 70. Reference numeral 72 illustrates the functions performed by control unit 20 once the instruction is received from the instruction cache 12. Control unit 20 simultaneously reads the operational code (opcode) of the instruction which is further described in Figures 7 and 8. Control unit 20 also simultaneously generates a read signal on lines 42 and 44 to read the general register 40 at the locations specified by the "b" and "x" fields of the instruction, which is also further described in Figures 7 and 8. Additionally, control unit 20 simultaneously produces the sign extended value specified by a current branch instruction (E-W1), or a sign extended immediate value (E-IM14), depending on whether the instruction is a branch instruction or a load instruction, respectively. The immediate value (E-IM14) and the value specified by the current branch instruction (E-W1) are values that are derived from the instructions as further described in Figures 7 and 8. Control unit 20 performs a sign extend operation on W1 and IM14 which comprises the process of repeating the positive or negative sign of these values up to a certain number of bits, e.g. 32 bits. Reference numeral 74 illustrates a decision block to determine if the instruction specified by the operational code is a load instruction, as illustrated by reference numeral 76, as more more fully described in Figure 3, or an add and branch if true instruction, illustrated by reference numeral 78, as more fully illustrated in Figure 4.

Figure 3 is a flow diagram illustrating the operation and device of Figure 1 in response to a load instruction. As illustrated by decision block 80, control unit 20 compares the target address specified by the T field of a current instruction with the operand address specified by the B field of a second subsequent instruction to determine if they are the same or different. If these addresses are the same, control unit 20 generates a bypass control signal on line 52 which is directed to multiplexer 48 to select the data cache data (DCD) to be transmitted to the arithmetic logic unit 46 via line 54. In this manner, data cache data (DCD) from a current instruction step is available at the input of arithmetic logic unit 46 to be combined with an immediate value (E-IM14) for a current instruction step whenever the current instruction step target address "t" is the same as the operand address "b" of the second subsequent instruction. This process of directing the data cache data directly to the input of the arithmetic logic unit allows the data cache 14 to have a response time of one and a half cycles, without delaying the use of the data cache data in a second subsequent instruction step.

If a bypass procedure were not implemented in accordance with the present invention, the data cache data would otherwise have to be written to the general registers, and then subsequently read from the general registers. In such a case, the data would not be available in time for a second subsequent load instruction and additional instruction step delay would be imposed in the system.

Hence, the generation of the bypass control signal allows the data cache 14 to have a 1.5 cycle response time without delaying the use of the data with a second subsequent instruction, whenever the target address of a current instruction is the same as the operand address of a second subsequent instruction. Reference numeral 82 illustrates a selection of the bypass data by directing data from the data cache, for a current instruction, directly to arithmetic logic unit 46.

If it is determined that the target address of a current load instruction is not the same as the operand address of a second subsequent load instruction, reference numeral 84 of Figure 3 illustrates that control unit 20 produces a signal on line 42 to read the contents of the general register at the address specified by "b" field of the load instruction. This data [GR(b)data] on line 54, or the data cache data (DC data), is then directed to the input of the arithmetic logic unit 46. Arithmetic logic unit 46 then adds the GR(b) data, or the data cache data, with the immediate value data of a second subsequent load instruction (E-IM14) in the ALU 46 to generate a data cache address on line 58, as illustrated by reference numeral 86 in Figure 3. The data cache address is then issued from microprocessor 10 to data cache 14, as illustrated by reference numeral 88 and the data is received back from the data cache 14, via line 50, as illustrated by reference numeral 90 of Figure 3. Data is then written to the general register 40 at the target address specified by the "t" field of the load instruction, as illustrated by reference numeral 92. Data cache store control signal 41 controls the writing of the data cache data (DCD) to the general register 40. As illustrated by reference numeral 94 of Figure 3, the data cache is also directed to multiplexer 48 to be available whenever the bypass control signal is generated.

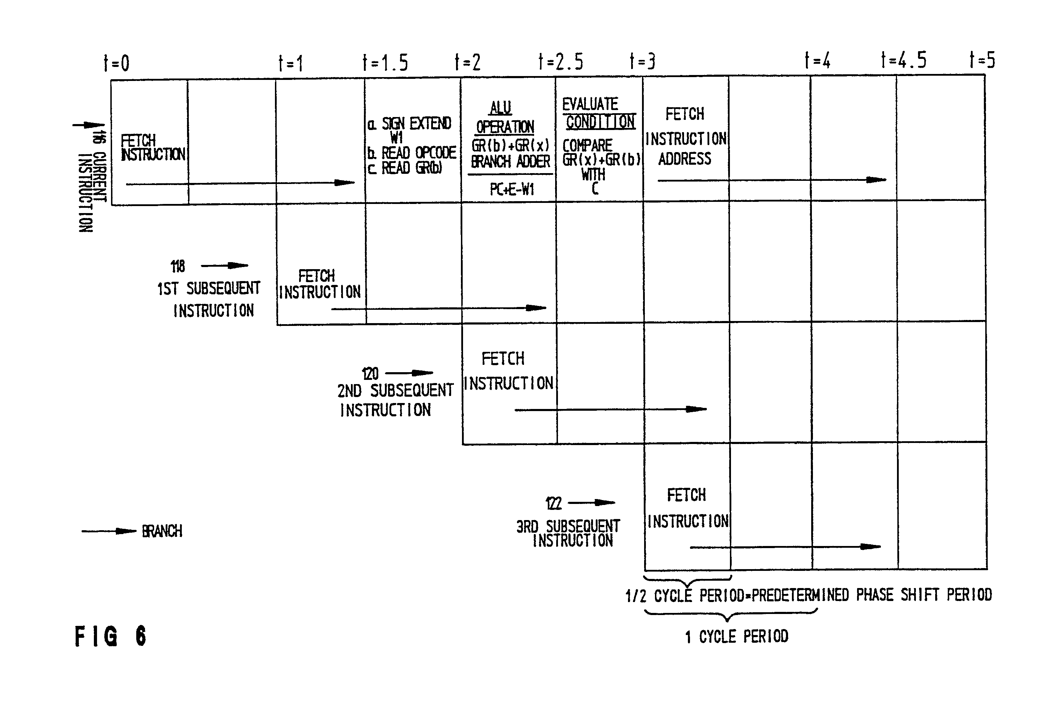

Figure 4 illustrates the operation of the device of Figure 1 when an add and branch if true instruction is received from instruction cache 12. As illustrated in Figure 4, reference numeral 96 indicates that read signals are generated on lines 42 and 44 to read the general register data specified at the "b" field [GR(b)data] and the "x" field [GR(x)data] from the general register 40. The GR(x) data and either the data cache data or GR(b) data, via multiplexer 48, are directed to ALU46 and added to produce a general register sum at output 38. Simultaneously, the program counter value (PC) and the sign extended W1 value (E-W1), read from the branch instruction, are added by branch adder 24, to generate a branch address which is applied to multiplexer 26. As illustrated by reference numeral 98 of Figure 4, comparator 36 compares the general register sum 38 with a condition value (C) that is specified by the "c" field of the add and branch if true instruction, and directed to comparator 36 via line 40 from control unit 20. If the condition value 40 matches the general register sum 38, a comparator control signal 34 is produced which is applied to multiplexer 26 to cause the branch address to be applied to instruction cache 12, which is equal to the program counter value (PC) plus the sign extended W1 value (PC + E-W1). This is illustrated by reference numeral 100 of Figure 4 which allows the branch address (PC + E-W1) from branch adder 24 to be fetched for a third subsequent instruction. In other words, even though the instruction cache access time is 1.5 cycles, the branch address (PC + E-W1) is still available in time for the instruction cache 12 to produce an instruction for a third subsequent instruction. This is more fully disclosed in the description of Figure 6. As indicated by reference numeral 102, program counter 22 is loaded with a new program value equal to the program counter value plus the sign extended W1 value (PC + E-W1), via line 32. Program counter 22 then continues with the new value for the instruction sequence as illustrated by reference numeral 104. As indicated by reference numeral 106, if the condition value is not the same as the general register sum, a comparator control 34 is not produced. In this case, the PC value is selected by multiplexer 26 to allow the sequential address from the PC to be issued for a third subsequent instruction as indicated by reference numeral 107.

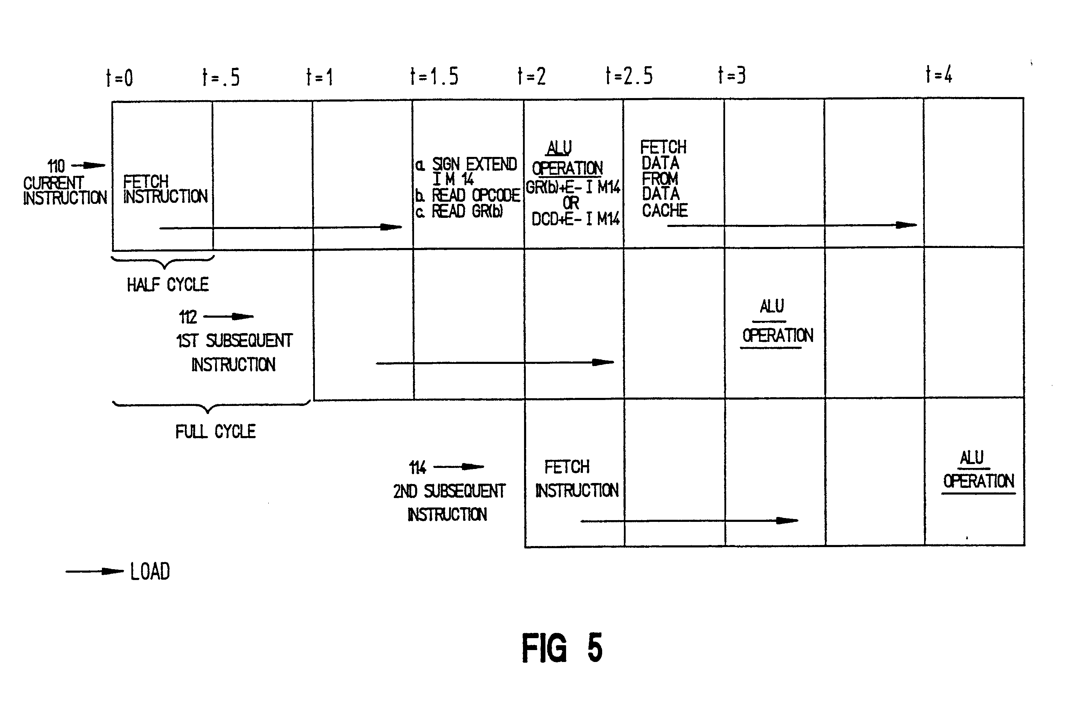

Figure 5 is a schematic diagram illustrating the pipeline for a series of load instructions. As illustrated in Figure 5, a series of sequential load instructions 110, 112, 114 are illustrated. The first instruction illustrated is the current load instruction 110 which can comprise an instruction which falls anywhere within the pipeline, i.e., a series of previous instructions may have preceded these instructions. The next instruction, i.e., first subsequent instruction 112, is also illustrated as a load instruction. Although Figure 5 illustrates a series of successive load instruction steps, first subsequent instruction step 112 need not necessarily be a load instruction to comprise a series of successive load instruction steps. Second subsequent load instruction 114 is also illustrated in the same manner in Figure 5.

Figure 5 illustrates, in graphic form, the manner in which each of the instruction steps proceeds in time. At the times $T=0$, $T=1$, $T=2$, and each integer number thereafter, clock 16 produces a cycle clock pulse to indicate the beginning of each cycle. A full cycle occurs between $T=0$ and $T=1$, and between each of the integer numbers shown. Clock 18 produces clock pulses at $T=.5$, $T=1.5$, and so on, to designate half cycle times between the cycle clock pulses produced by clock 16. In other words, clock 18 produces a series a clock pulses that are phase shifted by 180 degrees, or half a cycle from the cycle clock pulses produced by clock 16.

Referring again to Figure 5, the current instruction step 110 illustrates the manner in which instruction cache 12 is allowed 1.5 cycles, between time $T=0$ and time $T=1.5$, to fetch an instruction. During the next half instruction step, the device of Figure 1 performs a sign extension operation on the immediate value 14, reads the operational code (opcode), and reads the general register specified by the "b" field. Between time $T=2$ and time $T=2.5$, the ALU 46 performs its operation by adding either the GR(b) data and the E-IM14 data, or the data cache data (DCD) and the E-IM14 data, to produce the data cache address on line 58 (Figure 1). Data cache 14 is then given one and a half cycles between time $T=2.5$ and time $T=4$ to fetch data from the data cache and return it to the microprocessor chip. As illustrated in Figure 5, the data fetched from the data cache is available at time $T=4$ for the ALU operation to be performed by the second subsequent instruction step 114, so that if the target address of the current instruction is the same as the operand address of the second subsequent instruction 14, a bypass control signal is generated by control unit 20 to direct the data from the data cache of the current instruction 110 directly to ALU46 so that the data cache data (DCD) is available for use by the second subsequent instruction 114. In this manner, Figure 5 illustrates the way in which both the instruction cache and the data cache can be allowed a 1.5 cycle access time without imposing a delay penalty of more than a one instruction step delay. In other words, only the first subsequent instruction step 112 must be discarded if its operand address is the same as the target address for the current instruction step 110.

Figure 5 illustrates the manner in which the data is made available from the current instruction step 110 for the ALU operation of the second subsequent instruction step 114. In this manner, both the instruction cache access time and the data cache access time can be 1.5 cycles without imposing any greater delays than the delays that would normally be inherent in a one cycle access time, i.e., a one step delay. If the data cache access time were extended to two cycles it is clear that the data from the current instruction step 110 would not be available for the ALU operation of the second subsequent instruction 114 and an additional instruction step delay would be imposed on the pipeline.

Figure 6 schematically illustrates the instruction pipeline of the present invention for branch instructions. The clock signals are generated in the same manner as set forth in the description of Figure 5 to produce half cycle periods equal to the predetermined phase shift period and full cycle periods. As illustrated in Figure 6, the instruction cache for current instruction 116 is allowed 1.5 cycles between $T=0$ and $T=1.5$ to fetch an instruction. During the next half cycle, between $T=1.5$ and $T=2$, the device of Figure 1 sign extends W1, reads the opcode of the branch instruction, and reads the general registers specified by the "b" field. During the next half cycle between $T=2$ and $T=2.5$, the ALU performs an operation of adding the GR(b) data and the GR(x) data, and the branch adder adds the program counter (PC) data with the sign extended W1 data (E-W1). During the next half cycle, between $T=2.5$ and $T=3$, comparator 36 compares the general register sum GR(x) + GR(b) with the condition value "c" to determine if a branch instruction should be issued. The instruction cache is then given a 1.5 cycle access time between $T=3$ and $T=4.5$ to retrieve an instruction, whether it be the next subsequent instruction, or a branch instruction.

As illustrated in Figure 6, the third subsequent instruction 122 also fetches its initial instruction between $T=3$ and $T=4.5$, which exactly matches the time during which the current instruction 116 fetches the next instruction. Consequently, the instruction fetch for the current instruction 116 is available for the third subsequent instruction 122 even though the instruction cache has been allowed a 1.5 cycle access time. In a one state delay branch architecture, the first subsequent instruction 118 is executed so it is not considered as a delay. In other words, a branch instruction is positioned within the sequence of instructions so that the first subsequent instruction 118 can normally be executed. Hence, the only instruction step that must be necessarily be thrown away is the second subsequent instruction 120, resulting in a one instruction step delay for a one state delay branch architecture.

Figure 7 illustrates the data field of a 32-bit branch instruction utilized in accordance with the present invention. As shown in Figure 7, the first six bits of the 32-bit branch instruction is an operational code (opcode) which indicates that the instruction is indeed a add and branch if true instruction. The next five bits comprise the "b" field, which specifies a field within the general register to retrieve data. The next five bits comprise the "x" field which also specifies an address within the general registers to retrieve data. As illustrated in Figure 1, the GR(b) and GR(x) data retrieved from the general register 40 are added together to form the general register sum. Referring again to Figure 7, the next three bits comprise the "c" field, which constitute a three bit condition value which is compared to the general register sum to determine if a specified condition, i.e., the condition value, is true. The next 11 bits of the branch instruction comprise a value specified by the branch instruction, which is referred to as the W1 field. The subsequent two bits comprise control bits such as a nullify bit.

Figure 8 illustrates the data field of a 32-bit load instruction utilized in accordance with the present invention. As illustrated in Figure 8, the first six bits of the load instruction are also an operation code (opcode) identifying the instruction as a load instruction. Similarly, the next five bits also specify the "b" field, which comprises the "operand address" of the load instruction, i.e., the address from which data is to be retrieved from the general register. The next five bits comprise the "t" field or target field. The "t" field comprises the "target address" at which the data cache data (DCD) is to be stored in the general registers. The next two bits are space bits, and the remaining 14 bits comprise the immediate value (IM14) which is expanded and then combined in the arithmetic logic unit 46 with the data cache data (DCD) or the GR-(b) data, as illustrated in Figure 1.

Hence the preset invention comprises a device and method for allowing cache memory to operate, or have an access time, of greater than one cycle, but less than two cycles, without imposing any penalties for instruction step delays. The overall effect is that microprocessors can run at a much greater speed than would otherwise be allowed by the limitations resulting from the access time for cache memory. Additionally, the generation of phase delay clock pulses allows a function to be performed in partial cycles which further increases the speed of the microprocessor.

The foregoing description of the invention has been presented for purposes of illustration. It is not intended to be exhaustive or to limit the precise form disclosed, and other modifications and variations mad be possible in light of the above teachings. For example, the present invention may be implemented by allowing a three cycle access time for cache memory and initiating instructions every two cycles. Such a variation is considered to be an equivalent of the claimed invention and within the scope of the claims as set forth herein. The embodiment was chosen and described in order to best explain the principles of the invention and its practical application to thereby enable others skilled in the art to best utilize the invention and various modifications as are suited to the particular use contemplated. It is intended that the appended claims be construed to include other alternative embodiments of the invention except insofar as limited by the prior art.

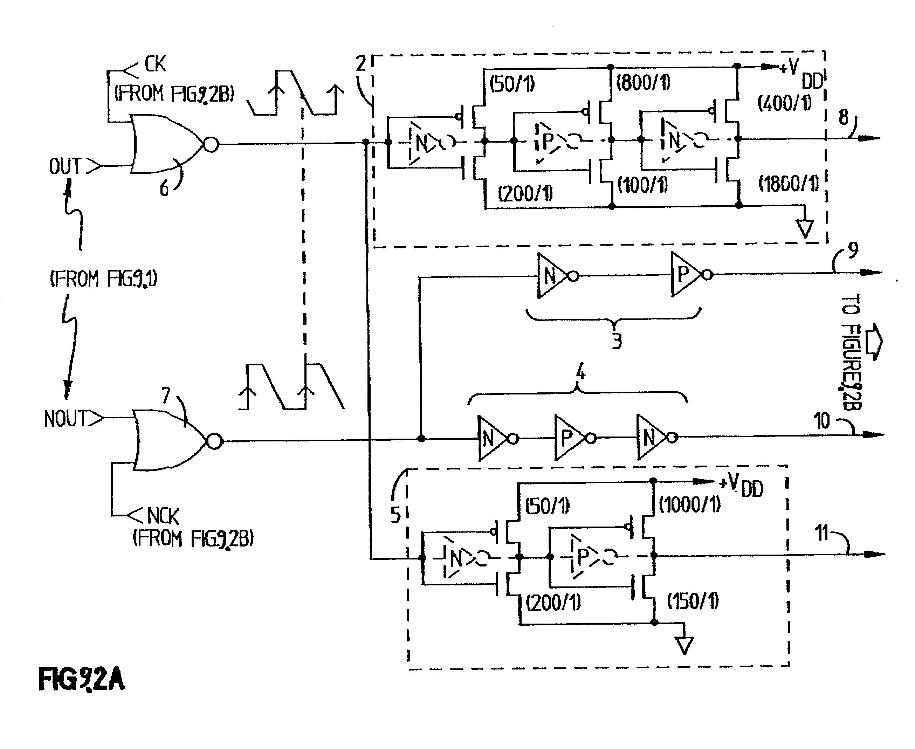

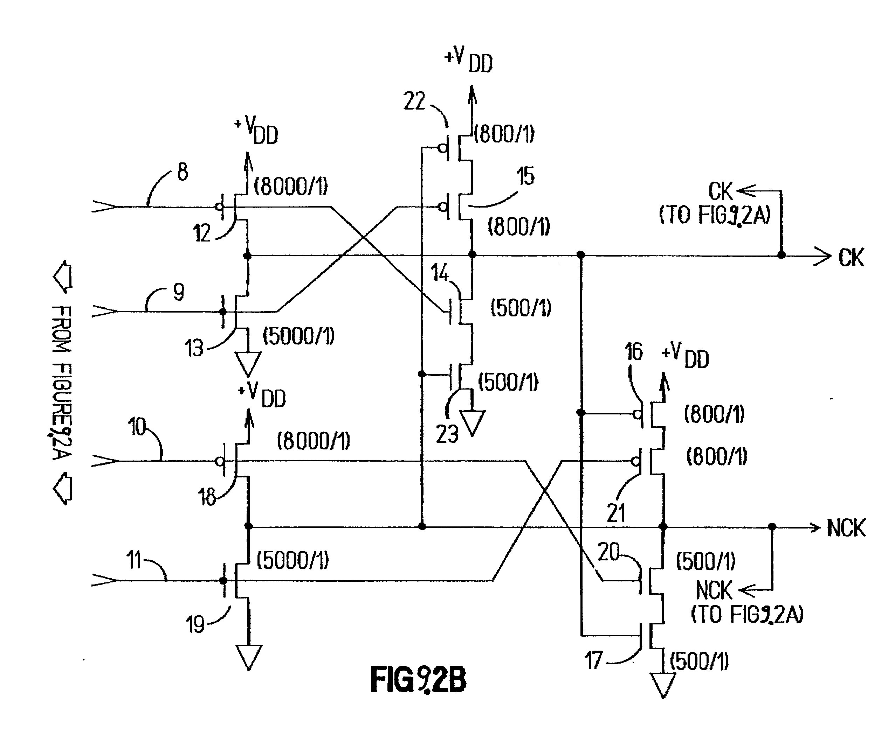

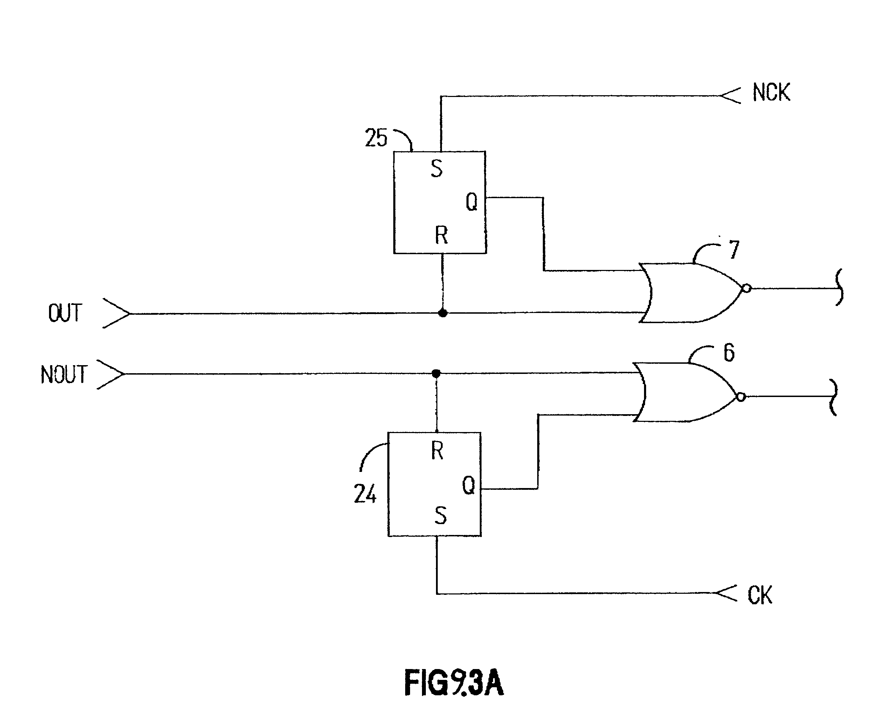

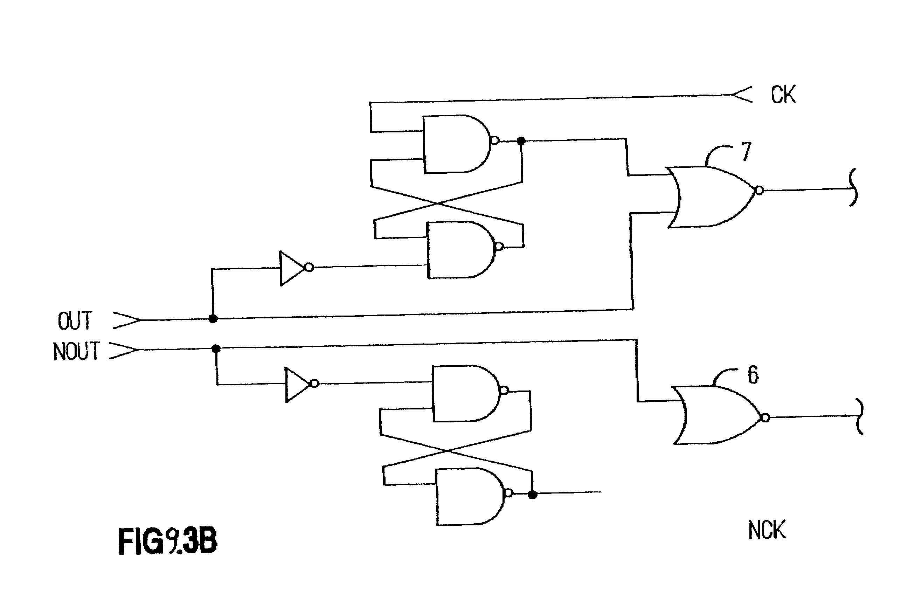

The following discloses the High Speed Low Skew Clock Circuit referenced above beginning in line 30 of page 8. The numerals in Figures 9.1 to 9.3B are partly in conflict with the numerals of Figures 1 to 8.

## HIGH SPEED LOW SKEW CLOCK CIRCUIT

### Background and Summary

A clock circuit for use in high speed microprocessor and other logic circuits should have fast transitions that occur in a known and reliable relation to each other (such reliability may be termed "low skew"). These desirable properties of high speed and low skew each require the minimization of internal propagation delay within the clock circuit. In addition, if the actual clock buffer circuitry is driven from an external signal, it would be desirable if the receiver circuitry were as insensitive as possible to the actual levels of the external signal, as well tolerant of drift in those levels.

These goals are met in the clock circuit described herein by employing a differential receiver in CMOS that is of the "common gate" configuration and that is assisted by an internally developed threshold voltage. The two sides of the differential receiver each produce a respective fast high-to-low transition that is then sent via an associated pair of gain paths to the actual output stage. One such pair of gain paths is associated with each side of, or output from, the differential receiver, for a total of four paths in all. As a consequence, each path need only exhibit excellent propagation for a leading edge transitioning in a particular direction at the input of the path, allowing optimization (transistor sizing) to favor that particular leading edge. This allows each gain path to achieve approximately half the propagation delay that a corresponding buffer would exhibit if it had to be responsible for active edges in both directions. The four gain paths are combined with a latch-like circuit that creates "hard" (i.e., powerful) drive of complementary output clock lines only during the initial period of time when the capacitance of those clock lines needs to be charged. Afterwards, the level of drive is reduced to a holding, or maintenance, level. This can be done, for example, by sensing that the clock line of interest has reached its high state, and then turning off the large transistor doing the hard driving. Another way to do it is to sense that the complementary clock signal has reached its low state. In either scheme, the fact that the complementary clock line is now low is used as part of a cross coupled output latch that keeps a smaller sustaining driver transistor turned on.

By using such a two-level drive a small signal can be used to abruptly terminate the holding drive, while at the same time the hard drive for the other state of the clock commences. That is, there are low propagation time gain paths for turning hard drives on, and for terminating the holding drive (which are the four set out above), but not a separate one for killing the hard drive. Instead, hard drive removal uses the associated gain path to propagate an active edge whose direction of transition is opposite of what that gain path is optimized for. That hurts nothing, however, since the hard drive need only be removed before the next transition in the clock (a little less than a half-cycle hence), which is long compared to the propagation times, whether optimal or not. Thus, this scheme avoids the need for a abrupt termination of the hard drive, by letting it go away at a slower rate as soon as it is not needed. This preserves overall minimum propagation time for the control of each transition in the clock, thus producing a high speed low skew clock.

Brief Description of the Drawings

Figure 9.1 is shematic representation of a CMOS differential receiver for clock signals that is constructed in accordance with the principles of the invention;

Figures 9.2A-B are schematic representations of an asymmetric gain buffer and two-level drive output stage constructed in accordance with the principles of the invention; and

Figures 9.3A-B describe an anti-glitch circuit that may be substituted into the circuit of Figures 9.2A-B.

Description of a Preferred Embodiment

Refer now to Figure 9.1, wherein is shown a schematic representation of a CMOS differential receiver circuit 1 suitable for being driven from a wide variety of sources, such as the ECL and TTL families of logic. The circuit 1 shown in Figure 9.1 may be termed a "common gate" differential amplifier that achieves low propagation delay on the high to low transitions of the output signals OUT and NOUT. In this and the other figures, transistors such as $Q_5$ that have small circles on their gates are P-channel devices, while those such as $Q_1$ are N-channel devices. It will be understood by those skilled in the art that the embodiment shown is not restricted in its teachings to only the polarities of the devices shown, and that if the polarity of each of the FET's is changed, +VDD made ground and ground made -VDD, then a circuit is obtained that has its input voltage referenced to and near the positive side of the supply voltage. Also, note that the numbers in parentheses (W/L) by each transistor denote its width W and length L, each in microns,

The operation of the differential receiver 1 of Figure 9.1 is described in detail in the paragraphs that follow. Applied to input terminals IN and NIN are an input signal and its complement. These input signals might be intended for use as a clock, a strobe, or perhaps for some other use. The actual levels of the input signals need not be known in advance, and these levels may experience a reasonable drift without disturbing the successful operation of the differential receiver circuit 1.

Furthermore, the circuit of Figure 9.1 may be implemented without any hysteresis, with hysteresis, or with what may be termed "negative hysteresis", where the circuit anticipates changes in the input signals.

The Transistors $Q_9$ and $Q_{10}$ are input protection devices for protection from ESD (electro-static discharge).

Transistor pairs $Q_1/Q_5$ and $Q_4/Q_8$ form bias circuits producing a bias equal to a single threshold voltage $V_t$. Transistors $Q_5$ and $Q_8$ act as load resistances for $Q_1$ and $Q_4$, respectively. These bias voltages cause the gate of $Q_3$ to equal $V_t$ plus the voltage $V_{IN}$ applied to IN, and the gate of $Q_2$ to equal $V_t$ plus the voltage applied at NIN. If the input voltage applied to IN is less than that applied to NIN ($V_{NIN}$), then the voltage $V_{OUT}$ at OUT will fall rapidly, since the gate voltage of $Q_2$ will be more than one $V_t$ higher than $V_{IN}$. At the same time $Q_7$ pulls $V_{NOUT}$ high, since the gate voltage of $Q_3$ diminished by $V_{NIN}$ is less than $V_t$.

To achieve hysteresis, the ratio of the widths of $Q_6$ to $Q_2$ is made larger than the ratio of the widths of $Q_5$ to $Q_1$. By symmetry, a similar larger ratio favors the ratio of $Q_7$ to $Q_3$ over the ratio of $Q_8$ to $Q_4$. For negative hysteresis, the relationship "less than" is substituted for "larger than" in the above. For no hysteresis, "equal to" is substituted for "larger than".

The cross coupling of $Q_6$ and $Q_7$ reduces the DC load on the input signals IN and NIN. This arises since, for each of the transistor pairs $Q_6/Q_2$ and $Q_7/Q_3$, one member of each pair is off whenever the other member of that pair is on. In this connection, it can be observed that the differential receiver circuit 1 of Figure 9.1 achieves high voltage gain (CMOS output swings for only one $V_t$ swing on the input) without incorporating any appreciable current gain.

As shown in Figure 9.2A, the outputs OUT and NOUT of Figure 9.1 are coupled through asymmetric buffers to form separate pull-up and pull-down signal paths. These separate paths are the cascaded series of buffers denoted by reference numerals 2 through 5. Separate pull-up and pull-down paths 2 and 3 are part of a latch-like circuit for generation of the signal CK (Clock) from the signals OUT and NOUT. Similarly, separate pull-up and pull-down paths 4 and 5 are part of a latch-like circuit for generation of the signal NCK from the signals OUT and NOUT. These latch-like circuits involve NOR gates 6 and 7 and the signals CK and NCK, which are generated by circuitry depicted in Figure 9.2B.

Consider path 3. It consists of two cascaded buffers, of which the first is labeled as "N" and the second as "P". This notation means that in the first buffer the N-channel device is large, while its associated P-channel device is small, In the second buffer the P-channel device is large, while its associated N-channel device is small. This particular arrangement propagates a rising edge (at the input of the cascaded series) faster than a falling one. It also propagates an input rising edge approximately twice as fast as does a cascaded series of buffers required to minimize propagation delay for both rising and falling edges at the input to the cascaded series.

Path 2 is similar to path 3, except that it contains an extra stage, so that for an abrupt low to high transition at the input of either path, path 2 produces a corresponding abrupt high to low transition, whereas path 3 would produce an abrupt low to high transition. Note also that within the dotted line denoted by reference numeral 2 is a schematic expansion defining exactly what is meant by this business of "labeled as N" and "labeled as P". The general idea here is this: by arranging that a cascaded series of buffers need only quickly propagate one active edge of an applied signal (leaving the meaning associated with the other would-be active edge to the buffers in a separate path) the FET's in each buffer of the path may be advantageously ratioed in favor of the N-channel or P-channel device whose purpose is to drive the active edge. Which devices these are is indicated by the N's and P's in Figure 9.2A that label the stages of the separate paths 2 through 5. This ratioing is simply the selection of the size of the designated transistor, and is a well known action based, in part, upon the square root of the mobility ratio for the N and P channel materials used in the transistors.

The idea behind the overall arrangement of Figure 9.2A is that each of NOR gates 6 and 7 will produce abrupt low to high transitions, but in alternation and occurring at different points in time;

that is, the output from the NOR gates 6 and 7 are non-overlapping signals. The abrupt low to high transitions from NOR gate 6 produce, with minimum delay (and hence with maximum clock rate and minimum propagation delay), an abrupt high to low transition at the output 8 of path 2 and an abrupt low to high transition at the output 9 of path 3. In like fashion, the abrupt low to high transition from NOR gate 7 produces with a minimum of delay an abrupt high to low transition at the output 10 of path 4 and an abrupt low to high transition at the output 11 of path 5. It should be remembered that the low to high transitions for paths 2 and 3 originate from the separate NOR gates and occur in interleaving alternation. Hence, line 8 experiences an abrupt falling edge in interleaving alternation with line 9 experiencing an abrupt rising edge. Similar remarks apply to the outputs on lines 10 and 11. Note that because they originate at the same NOR gate, the abrupt falling edge on line 8 occurs simultaneously (within propagation delay differences that are very small indeed) with the abrupt rising edge on line 11. A similar simultaneity obtains far the transitions on lines 9 and 10.

Turning now to Figure 9.2B, here is what use is made of the various active edges described in connection with Figure 9.2A. When line 8 experiences an abrupt falling edge, it causes transistor 12 to turn on abruptly and transistor 14 to turn off abruptly. Transistor 12 is the primary current path for rapidly pulling CK high. (In the two level drive scheme, it is the "hard" driver for CK.) At the same time, an abrupt rising transition on line 11 turns on transistor 19, pulling NCK low, which in turn shuts off transistor 23 and turns on transistor 22. Line 9 has meanwhile been low, keeping transistor 13 off (making it safe for transistor 12 to turn on) and keeping transistor 15 on. Thus, turning transistor 22 on will also contribute current toward the charging of the line capacitance of the CK line, although the primary purpose of the path through transistors 22 and 15 is to maintain CK high once the line capacitance of the CK line is charged and transistor 12 is turned off in anticipation of the next transition in the input signal.

As described above, NCK goes low as CK goes high. This is because lines 8 and 11 originate from a common transition, but experience different numbers of inversion. Thus, when line 8 experiences an abrupt falling edge, line 11 experiences an abrupt rising edge. That, in turn, turns an transistor 19 and causes NCK to go low. That, in turn, is what causes transistor 22 to turn on as mentioned above.

By symmetry, a similar set of actions obtains as line 10 experiences an abrupt falling edge and line 9 experiences an abrupt rising edge, only now transistor 18 serves as a primary current path for hard drive for the NCK line. Transistors 16 and 21 maintain the level on NCK after transistor 18 shuts off, again in anticipation of the next transition in the input signal.

We turn now to how the transition from hard drive to a maintenance, or holding drive, is accomplished. Consider the low to high transition for the line CK. Notice how the signal CK is fed back to the NOR gate 6 in Figure 9.2A. It will be recalled that it was an abrupt falling edge on line 8 that pulled CK high. That abrupt falling edge was in turn caused by an abrupt rising edge at the output of NOR gate 6. That, in turn, was caused by OUT going low while CK was already low. That output of NOR gate 6 will remain high only as long as both OUT and CK are low. But CK sets pulled high, and very abruptly, too, as we have seen. When CK gets high the output of NOR gate 6 goes low. This high to low transition propagates more slowly through paths 2 and 5 than does its low to high counterpart discussed earlier. Eventually, line 8 experiences a rising edge, and line 11 a falling edge. The rising edge on line 8 shuts off transistor 12, removing the hard drive for CK. The holding drive of transistors 15 and 22 remains on, however. This is, in part, because NCK is still low (keeping transistor 22 on) and in part because line 9 is low. Line 9 is low because NOUT is high (we started with OUT going low, remember), which forces the output of NOR gate 7 to be low, which through path 3 forces line 9 low also. This holding drive stays in effect until OUT and NOUT transition to their opposite states, whereupon a symmetry argument involving the arrival of NCK at NOR gate 7 explains how the hard drive of NCK from transistor 18 is removed and holding drive from transistors 16 and 21 sustains NCK.

The arrangement described above will work as described provided that certain constraints are placed upon the transitions of OUT and NOUT. In particular, if CK falls before OUT rises sufficiently, the output of NOR gate 6 may glitch high and cause a drive fight. A similar possibility exists that the output of NOR gate 7 may glitch high if NCK falls before NOUT rises sufficiently. One solution is to control the associated transitions on OUT and NOUT. Another solution is to replace the NOR gates 6 and 7 with the circuitry shown in Figures 9.3A and 9.3B. What that circuitry does is to add some sequencing logic ahead of the NOR gate.

Figure 9.3B illustrates at the gate level what circuitry may be used, while Figure 9.3A illustrates the functional equivalent of Figure 9.3B. Consider the case for NOR gate 6, as shown in Figure 9.3B. A moments reflection will confirm that the anti-glitching circuit operates by using the rising edge of OUT subsequent to CK's going low to cause the output of NOR gate 6 to go low. That is, the Q output of S/R flip-flop 24 substitutes the rising edge of OUT for the falling edge of CK. S/R flip-flop 25 performs a similar function for NOR gate 7 and the signals NOUT and NCK.

Figure 9`3B shows a gate level embodiment that has the same overall functionality as Figure 9.3A. Note however, that CK and NCK have been interchanged to avoid the use of extra inverters ahead of their inputs to the cross coupled gates that function as the flip-flops. A further difference between the circuits of Figure 9.3A-B concerns how the hard drive is removed. In Figure 9.3A the rising edge of clock removes the hard drive, as discussed in connection with Figure 9.2A-B. In the case of Figure 9.3B, the falling on NCK is used to terminate the hard drive of CK.

A clock buffer circuit achieves insensitivity to the particular voltage levels and drift therein of input signals used to generate the clock, by use of a differential common gate amplifier incorporating an internally generated threshold voltage. Four separate gain paths couple the differential common gate amplifier to an output stage. Two of the gain paths are used to propagate edges that cause respective abrupt transitions in each direction for a first of two complementary clock signals. The other two accomplish the same for the other complementary clock signal. Each gain path is optimized to propagate a leading edge of a particular direction (relative to its point of origin, the direction of the edge inverts as it goes from stage to stage). Of these four gain paths, a first pair are used to create a high level of drive for the low to high transitions in the clock signal and its complement. Because of the optimization, this drive cannot be removed as abruptly as it can be applied. A latch-like circuit in the gain paths cause early removal of the high level, or hard, drive, leaving in place a maintenance, or holding, level of drive. Each holding drive is abruptly removed by an associated gain path in the remaining pair of gain paths. The hard drive is left in place only long enough to ensure that the capacitance of the clock line is adequately charged. An anti-glitch mechanism bullet proofs the entire circuit against drive fights caused by ambiguities arising from slow transitions that might arise from the differential common gate amplifier. The clock circuit comprises the following features:

A circuit for generating complementary signals, comprising:

first and second output terminals;

first switching means, coupled to the first output terminal, for pulling the first output terminal high in response to a first drive signal having a first logic level;

second switching means, coupled to the first output terminal, for pulling the first output terminal low in response to a second drive signal having a second logic level;

third switching means, coupled to the second output terminal, for pulling the second output terminal high in response to a third drive signal having a third logic level;

fourth switching means, coupled to the second output terminal, for pulling the second output terminal low in response to a fourth drive signal having a fourth logic level;

first holding means, coupled to the first and second output terminals and to the second drive signal, for pulling the first output terminal high whenever the second output terminal is low and the second drive signal has the complement of the second logic level;

second holding means, coupled to the first and second output terminals and to the fourth drive signal, for pulling the second output terminal high whenever the first output terminal is low and the fourth drive signal has the complement of the fourth logic level;

first logic means, coupled to the first output terminal, for forcing the first drive signal to the complement of the first logic level in response to the first output terminal going high;

second logic means, coupled to the second output terminal, for forcing the fourth drive signal to the complement of the fourth logic level in response to the second output terminal going high; and

sequence means, coupled to the first and second logic means and to an input signal, for producing the first through fourth drive signals, the first and fourth drive signals transitioning at the same time and the first and fourth logic level being complementary, the second and third drive signal transitioning at the same time and in interleaving alternation with the first and fourth drive signals, and the second and third logic levels being complementary.

## Claims

1. A method of executing a series of successive instructions in a computer system such that a separate instruction step is initiated for at least every cycle comprising the steps of:

    accessing instruction cache in said computer system to fetch an instruction in less than two cycles and more than one cycle to allow an access time of more than one cycle for said instruction cache;

    accessing data cache in said computer system to fetch data in less than two cycles and more than one cycle to allow an access time of more than one cycle for said data cache;

    directing data from said data cache to an arithmetic logic unit whenever said data is required by a second subsequent load instruction step so that a penalty of only one instruction step delay is imposed even though said access time of said instruction cache and said data cache is more than one cycle; and,

    fetching an instruction in a third subsequent instruction step from a instruction address specified by current branch instruction step whenever a specified condition in said current instruction step is true so that a penalty of only a one instruction step delay is imposed in a one state delay branch architecture even though said access time of said instruction cache and said data cache is more than one cycle.

2. The method of claim 1 wherein said step of accessing instruction cache further comprises accessing instruction cache in approximately 1.5 cycles.

3. The method of claim 1 wherein said step of accessing data cache further comprises accessing data cache in approximately 1.5 cycles.

4. A method of executing a series of successive instruction steps in a computer system that produces a clock pulse that is phase delayed from a cycle clock pulse by a predetermined phase shift period, comprising the steps of:

    accessing an instruction cache in said computer system to fetch instructions during an access time period substantially equal to one cycle plus said predetermined phase shift period;

    fetching a third subsequent instruction step as a target of a branch instruction whenever a specified condition in said current branch instruction step is true so that a penalty of only a one instruction step delay is imposed in a one state delay branch architecture even though said access time period of said instruction cache is more than one cycle.

5. A method of executing a series of successive load instruction steps in a computer system that produces a clock pulse that is phase shifted from a cycle clock pulse by a predetermined phase shift period, comprising the steps of;

    accessing a data cache in said computer system to fetch data cache data during a period substantially equal to one cycle plus said predetermined phase shift period;

    comparing a target address of a current load instruction with a operand address of a second subsequent load instruction step;

directing said data cache data to an arithmetic logic unit whenever said operand address is the same as said target address so that a penalty of only one instruction step delay is imposed even though access time of said data cache to fetch data cache data is substantially equal to one cycle plus said predetermined phase shift period.

6. The method of claim 5 further comprising the step of:

accessing instruction cache in said computer system to fetch an instruction during an access time period substantially equal to one cycle plus said predetermined phase shift period so that both said instruction cache and said data cache are allowed more than one cycle response time while imposing a penalty of only a one instruction step delay.

7. The method of claim 6 wherein said predetermined phase shift period is substantially equal to .5 cycles.

8. A method of executing instructions in an instruction pipeline that allows more than one cycle access time for instruction cache and data cache while imposing a delay of only one instruction step for load instructions and branch instructions in a one state delay branch architecture comprising the steps of:

generating two clock signals that have substantially equal periods that are equal to one cycle in said instruction pipeline;

phase delaying one of said two clock pulses by a predetermined phase delay period;

sequencing a program counter with said clock signals so that a sequential instruction address is generated for each cycle;

fetching a current instruction from instruction cache at said sequential instruction address during a period equal to one cycle plus said predetermined phase delay period;

reading an operational code of said current instruction to determine the type of instruction to be performed;

comparing a target address of a current load instruction step with a operand address of a second subsequent load instruction step;

directing data cache data from a data cache to an arithmetic logic unit whenever said target address of said current load instruction step is the same as said operand address of said second subsequent load instruction step;

reading general register data from a general register specified by said operand address of said second subsequent load instruction step whenever said operand address of said second subsequent load instruction step is different than said target address of said current load instruction step;

separately adding said general register data and said data cache data to an immediate value of said current load instruction to generate a data cache address;

fetching data from said data cache at said data cache address during a period equal to one cycle plus said predetermined phase delay period;

storing data at said target address of said current load instruction step in said general register;

adding the contents of two general registers specified by a current branch instruction to produce a general register sum;

adding said sequential instruction address to a value specified by said current branch instruction to produce a branch address.

comparing said general register sum with a condition value specified by said current branch instruction;

issuing said sequential instruction address whenever said general register sum is different from said condition value;

issuing said branch address whenever said general register sum is the same as said condition value such that said branch address is available for a third subsequent instruction step even though said current branch instruction is fetched during a period substantially equal to one cycle plus said predetermined phase delay period;

fetching an instruction from said branch address for said third subsequent instruction step; and,

resetting said program counter to said branch address.

9. The method of claim 8 wherein said phase shift period is substantially equal to .5 cycles.

10. A method of executing load instructions in an instruction pipeline that allows more than one cycle access time for data cache while imposing a delay of only one instruction step for load instructions, comprising the steps of:

producing a series of cycle clock pulses to define a cycle period;

producing a series of phase shifted clock pulses that are phase shifted from said cycle clock pulses by a predetermined phase shift period;

comparing a target address of a current load instruction step with an operand address of a second subsequent load instruction step;

directing data cache data from a data cache to an arithmetic logic unit whenever said target address of said current load instruction step is the same as said operand address of said second subsequent load instruction step such that a delay of only one instruction step is imposed;

reading general register data from a general register during said second subsequent load instruction step whenever said operand address of said second subsequent load instruction step is different than said target address of said current load instruction step;

adding said general register data to an immediate value of said current load instruction step to generate a data cache address whenever said operand address of said second subsequent load instruction step is different than said target address of said current load instruction step;

adding said data cache data to said immediate value to generate said data cache address whenever said target address is the same as said operand address;

fetching data from said data cache address during a period equal to one cycle plus said predetermined phase shift period;

storing data at said target address of said current load instruction step in said general register.

11. A method of executing branch instructions in an instruction pipeline that allows more than one cycle access time for instruction cache while imposing a delay of only one instruction step in a one state delay branch architecture, comprising the steps of:

producing a series of cycle clock pulses to define a cycle period;

producing a series of phase shifted clock pulses that are phase shifted from said cycle clock pulses by a predetermined phase shift period;

fetching a current branch instruction from said instruction cache at an address specified by a sequential instruction address during a period substantially equal to one cycle plus said predetermined phase shift period;

adding the contents of two general registers specified by said current branch instruction to produce a general register sum;

adding said sequential instruction address to a value specified by said current branch instruction to produce a branch address;

comparing said general register sum with a condition value specified by said current branch instruction;

issuing said sequential instruction address whenever said general register sum is different from said condition value;

issuing said branch address whenever said general register sum is the same as said condition value such that said branch address is available for a third subsequent instruction step even though said current branch instruction is fetched during a period substantially equal to one cycle plus said predetermined phase shift period.

12. A device for executing load instructions in an instruction pipeline that allows more than a one cycle access time for data cache while imposing a delay of only one instruction step for load instructions comprising:

clock means for generating cycle clock pulses that define a cycle period and phase shifted clock pulses that are phase shifted from said cycle clock pulses by a predetermined phase shift period;

control means for generating a bypass signal whenever a target address of a current load instruction step is the same as a operand address for a second subsequent load instruction step;

data cache means having an access time substantially equal to said cycle period plus said predetermined phase shift period for generating data cache data;

means for directing said data cache data from a current load instruction step to an arithmetic logic unit in response to said bypass signal so that said data cache data from said current load instruction can be combined with an immediate value of a second subsequent load instruction step resulting in a delay of only one instruction step even though said data cache means has an access time substantially equal to said cycle period plus said predetermined phase shift period.

13. A device for executing branch instructions in an instruction pipeline that allows more than one cycle access time for instruction cache while imposing a delay of only one instruction step in a one state delay branch architecture comprising:

clock means for generating cycle clock pulses that define a predetermined cycle period and phase shifted clock pulses that are phase shifted from said cycle clock pulse by a predetermined phase shift period;

comparator means for comparing a condition value of a current branch instruction with a general register sum to produce a comparator control signal;

means for generating a branch address whenever said condition value is the same as said general register sum;

instruction cache means for generating an instruction in response to said branch address during an access time that is substantially equal to said predetermined cycle period plus said predetermined phase shift period so that said branch instruction can be utilized by a third subsequent instruction, resulting in a delay of only one instruction step in a one state delay branch architecture device.

EP 0 442 116 A2

FIG 1

START 60

CLOCK GENERATES
CLOCK SIGNAL | 62

CLOCK SIGNAL
SENT TO PROGRAM COUNTER | 64

PROGRAM COUNTER GENERATES
A SEQUENTIAL ADDRESS SIGNAL
(PC) | 66

MPU 10 SENDS SEQUENTIAL
OR BRANCH ADDRESS SIGNAL TO
INSTRUCTION CACHE | 68

INSTRUCTION RECEIVED
BACK FROM INSTRUCTION CACHE
12 BY MPU 10 | 70

a. READ OPCODE
b. READ GR SPECIFIED BY b AND x FIELDS
c. SIGN EXTEND IM 14 OR W1 | 72

74 INSTRUCTION SPECIFIED BY OPCODE?

ADD AND BRANCH IF TRUE → B 78

LOAD

76 A

**FIG 2**

EP 0 442 116 A2

Ⓐ

```
                    ┌─────────────────────────┐
                    │ COMPARE TARGET ADDRESS (t)│  80        SAME
                    │ OF CURRENT INSTRUCTION WITH├──────────────────────┐
                    │ OPERAND ADDRESS (b) OF 2ND │                      │
                    │ SUBSEQUENT INSTRUCTION     │                      ▼
                    └─────────────────────────┘              ┌──────────────────────┐  82
                              │ DIFFERENT                     │ [SELECT BYPASS DATE]  │
                              ▼                               │ DIRECT DATA FROM DATA CACHE
              ┌──────────────────────┐                        │ FOR CURRENT INSTRUCTION
              │ [READ GR(b)]          │                        │ DIRECTLY TO ALU       │
              │ READ CONTENTS OF GENERAL│                      └──────────────────────┘
              │ REGISTER AT ADDRESS SPECIFIED│                        │
              │ BY b FIELD          84 │                              │
              └──────────────────────┘                              │
                          │                                          │
                          └──────────────┬───────────────────────────┘
                                         ▼
                        ┌────────────────────────────────────┐  86
                        │ ADD GR(b) DATA OR SELECTED          │
                        │ BYPASS DATA (DCD) WITH EXPANDED IM14 │
                        │ OF A SECOND SUBSEQUENT LOAD INSTRUCTION│
                        │ IN ALU TO GENERATE A DATA CACHE ADDRESS│
                        └────────────────────────────────────┘
                                         ▼
                        ┌────────────────────────────────────┐  88
                        │ ISSUE ADDRESS TO DATA CACHE         │
                        └────────────────────────────────────┘
                                         ▼
                        ┌────────────────────────────────────┐  90
                        │ RECEIVE DATA BACK FROM DATA CACHE   │
                        └────────────────────────────────────┘                94
                                         ▼
                        ┌────────────────────────────────────┐  92
                        │ WRITE DATA TO GENERAL REGISTER      │
                        │ AT ADDRESS SPECIFIED BY t FIELD OF  │
                        │ LOAD INSTRUCTION                    │
                        └────────────────────────────────────┘
```

FIG 3

EP 0 442 116 A2

(B)

96

a. ADD CONTENTS OF GENERAL REGISTERS
   SPECIFIED BY GR (b) AND GR (x) IN ALU
b. ADD PROGRAM COUNTER VALUE AND W1 TO GENERATE
   A BRANCH ADDRESS

98

COMPARE OUTPUT OF ALU WITH CONDITION SPECIFIED
BY C FIELD OF INSTRUCTION

107

CONTINUE WITH CURRENT
INSTRUCTION SEQUENCE

CONDITION
NOT TRUE

106

ALLOW SEQUENTIAL ADDRESS
FROM PC TO BE ISSUED FOR
3RD SUBSEQUENT INSTRUCTION

CONDITION
TRUE

ALLOW BRANCH ADDRESS FROM
ADDER TO BE ISSUED FOR 3RD
SUBSEQUENT INSTRUCTION

100

102

LOAD PROGRAM COUNTER
TO NEW VALUE
EQUAL TO PC + E-W1

104

CONTINUE WITH NEW
INSTRUCTION SEQUENCE

FIG 4

**FIG 5**

EP 0 442 116 A2

t=0   t=1   t=1.5   t=2   t=2.5   t=3   t=4   t=4.5   t=5

116 CURRENT INSTRUCTION

FETCH INSTRUCTION

a. SIGN EXTEND W1
b. READ OPCODE
c. READ GR(b)

ALU OPERATION
$GR(b)+GR(x)$ BRANCH ADDER
$PC+E-W1$

EVALUATE CONDITION
COMPARE $GR(x)+GR(b)$ WITH C

FETCH INSTRUCTION ADDRESS

118 → 1ST SUBSEQUENT INSTRUCTION

FETCH INSTRUCTION

120 → 2ND SUBSEQUENT INSTRUCTION

FETCH INSTRUCTION

122 → 3RD SUBSEQUENT INSTRUCTION

FETCH INSTRUCTION

→ BRANCH

1/2 CYCLE PERIOD=PREDETERMINED PHASE SHIFT PERIOD

1 CYCLE PERIOD

FIG 6

BRANCH →

| OPCODE | b FIELD | x FIELD | C FIELD | w1 FIELD | N | W |
|--------|---------|---------|---------|----------|---|---|
| 6 BITS | 5 BITS | 5 BITS | 3 BITS | 11 BITS | 1 | 1 |

## FIG 7

LOAD →

| OPCODE | b FIELD | t FIELD | SPACE | I M 14 |
|--------|---------|---------|-------|--------|
| 6 BITS | 5 BITS | 5 BITS | 2 BITS | 14 BITS |

## FIG 8

EP 0 442 116 A2

FIG 9.1

EP 0 442 116 A2

TO FIGURE 9.2B

FIG 9.2A

FIG 9.2B

CK (TO FIG 9.2A)

NCK (TO FIG 9.2A)

FROM FIGURE 9.2A

EP 0 442 116 A2

FIG9.3A

EP 0 442 116 A2

FIG.3B